# EUROPÄISCHE PATENTSCHRIFT

(11) **EP 3 102 005 B1**
(45) Veröffentlichungstag und Bekanntmachung des Hinweises auf die Patenterteilung: **31.07.2019**
(21) Anmeldenummer: 16171237.7
(22) Anmeldetag: 25.05.2016
(51) Int. Cl.: H05B 37/02, B65G 1/137

(54) **SIGNALVORRICHTUNG FÜR LIFTREGAL**
SIGNALLING DEVICE FOR LIFT SHELF
DISPOSITIF DE SIGNAL POUR UN RAYONNAGE À ÉLÉVATION

(30) Priorität: 26.05.2015 DE 102015209579
(43) Veröffentlichungstag der Anmeldung: 07.12.2016
(73) Patentinhaber: Jungheinrich Aktiengesellschaft, 22047 Hamburg (DE)
(72) Erfinder: GEWALD, Norbert, 85737 Ismaning (DE); SCHWAIGER, Martin, 82490 Farchant (DE)
(74) Vertreter: Tiesmeyer, Johannes

(56) Entgegenhaltungen:
- DE-A1-102006 057 266
- DE-U1- 9 301 327
- US-A1- 2006 206 235

## Beschreibung

Die Erfindung betrifft eine Signalvorrichtung für ein Lagersystem, wobei das Lagersystem ein Warentransportsystem, welches dazu eingerichtet ist, Waren zwischen einem Warenmagazin und wenigstens einem Ausgaberaum zu transportieren, und eine Steuereinheit umfasst, welche dazu eingerichtet ist, eine durch einen Benutzer eingegebene oder von einem übergeordneten System übermittelte Anweisung zu erfassen und das Warentransportsystem derart zu steuern, dass eine angeforderte Ware durch das Warentransportsystem in dem Ausgaberaum positioniert wird. Hierbei umfasst der wenigstens eine Ausgaberaum wenigstens eine Bedienöffnung, durch welche der Benutzer auf die in dem Ausgaberaum positionierte Ware zugreifen kann.

In letzter Zeit haben hochautomatisierte modulare Lagersysteme, wie beispielsweise sogenannte Liftregale und Paternosterregale, im Bereich moderner Logistiksysteme eine erhöhte Aufmerksamkeit erhalten. In derartigen Regalen werden Tablare, auf denen sich die zu lagernden Waren befinden, an einer oder beiden Seiten des Regals vertikal eingelagert. Die Tablare können dann durch ein Transportsystem automatisch in einem Ausgaberaum positioniert werden, auf den ein Benutzer zugreifen kann, um die entsprechende Ware zu entnehmen. Hierzu umfasst das Lagersystem eine Benutzerschnittstelle zur Eingabe von Aufträgen, beispielsweise einen Barcode-Scanner, die mit einer Steuereinheit betriebsmäßig verbunden ist, die ihrerseits das Transportsystem steuert, um die Tablare automatisch zum Ausgaberaum zu transportieren. Alternativ können derartige Aufträge auch durch ein übergeordnetes System erzeugt und durch eine Schnittstelle, beispielsweise mittels einer Netzwerkverbindung, an die Steuereinheit des Lagersystems übergeben werden. Dies erlaubt eine hervorragende Integration des Lagersystems in ein logistisches Gesamtkonzept.

Derartige Lagersysteme bieten in modernen Logistikeinrichtungen durch ihren hohen Automatisierungsgrad und ihre sehr gute Flächenausnutzung zahlreiche Vorteile. Insbesondere können durch die automatische Anlieferung der angeforderten Ware in der Bedienöffnung Bedienungsfehler im Sinne falsch ausgewählter Waren verhindert oder wenigstens verringert werden.

Andererseits entsteht durch die automatische Anlieferung der Tablare allerdings auch ein gewisses Verletzungsrisiko für den Benutzer, falls dieser bereits in den Ausgaberaum hineingreift, solange das entsprechende Tablar nicht endgültig positioniert worden ist und daher das Warentransportsystem noch in Bewegung ist. Zur Verhinderung solcher Unfälle sind gebräuchliche Liftregale mit einer Sicherheitslichtschranke im Bereich ihrer Bedienöffnung ausgestattet, deren Unterbrechung zu einem Nothalt des Liftregals führt, wenn der Ausgaberaum noch nicht für einen Zugriff freigegeben ist. In der Tat ist der Zugriff durch die Bedienöffnung erst dann zu gestatten, wenn eine dem Antransport zugeordnete Abschlusstür im rückwärtigen Teil des Ausgaberaums geschlossen ist. Da sich das Tablar allerdings bereits vorher in einer Position befindet, die eine Entnahme der Ware erlaubt, geschieht es häufig, dass Benutzer in den Ausgaberaum greifen, bevor die Abschlusstür geschlossen worden ist. Dadurch wird es im Falle der Unterbrechung der Lichtschranke zum oben angesprochenen Nothalt des gesamten Liftregals kommen, was zu einem erheblichen Zeitverlust im vorgesehenen Ablauf führen wird, da daraufhin zunächst eine manuelle Freigabeprozedur durchgeführt werden muss.

Es ist die Aufgabe der vorliegenden Erfindung, eine Vorrichtung bereitzustellen, die derartige Bedienfehler eines Lagersystems effizient verhindern kann und dabei einfach aufgebaut und leicht in bestehenden Lagersystemen nachzurüsten

Die vorliegende Erfindung betrifft ein Lagersystem gemäß Anspruch 1. Weitere vorteilhafte Ausführungsformen ergeben sich aus den Unteransprüchen.

Insbesondere betrifft die Erfindung ein Lagersystem, das ein Warentransportsystem, welches dazu eingerichtet ist, Waren zwischen einem Warenmagazin und einem Ausgaberaum zu transportieren, und eine Steuereinheit umfasst, welche dazu eingerichtet ist, eine durch einen Benutzer eingegebene Anweisung zu erfassen und das Warentransportsystem derart zu steuern, dass eine angeforderte Ware durch das Warentransportsystem in dem Ausgaberaum positioniert wird, wobei der Ausgaberaum wenigstens eine Bedienöffnung umfasst, durch welche der Benutzer auf die in dem Ausgaberaum positionierte Ware zugreifen kann und ferner das Lagersystem wenigstens eine Signalvorrichtung umfasst.

Die Signalvorrichtung ist betriebsmäßig mit der Steuereinheit des Lagersystems oder einem übergeordneten System gekoppelt oder koppelbar und dazu eingerichtet, mittels eines jeweiligen optischen Signals den Benutzer zu benachrichtigen, dass ein Zugreifen durch die Bedienöffnung momentan zulässig ist oder nicht zulässig ist.

Der Begriff "zulässig" bedeutet in diesem Kontext, dass Sicherheitseinrichtungen des Lagersystems einen sicheren Zustand anzeigen, was in der Regel bedeutet, dass eine angeforderte Ware in dem Ausgaberaum positioniert worden ist und sämtliche weiteren Vorbereitungen zur Entnahme der angeforderten Ware ebenfalls abgeschlossen sind. Dies kann beispielsweise umfassen, dass das Warentransportsystem nicht mehr in Bewegung ist und daher ein Zugriff durch die Bedienöffnung für den Benutzer keine Gefahr darstellt.

Die Signalvorrichtung ist erfindungsgemäß derart ausgebildet, dass sie wenigstens eine erste Beleuchtungseinheit einer ersten Farbe und eine zweite Beleuchtungseinheit einer zweiten Farbe umfasst, wobei die Beleuchtungseinheiten jeweils wenigstens ein Leuchtmittel umfassen und derart eingerichtet sind, dass die erste Beleuchtungseinheit den Ausgaberaum beleuchtet, wenn ein Zugreifen durch die Bedienöffnung momentan zulässig ist, und die zweite Beleuchtungseinheit den Ausgaberaum beleuchtet, wenn ein Zugreifen durch die Bedienöffnung momentan nicht zulässig ist. Indem die beiden Beleuchtungseinheiten jeweils derart angeordnet sind, dass sie den Ausgaberaum an sich von innen beleuchten, ist es für den Benutzer nicht nötig, den Kopf in Richtung einer extern angebrachten Signalvorrichtung zu wenden, sondern er erhält durch die jeweilige Beleuchtung des Ausgaberaums selbst die für ihn nötigen Informationen direkt in seinem Sichtfeld geliefert. Eine solche Signalvorrichtung ermöglicht somit einen besonders flüssigen und zeitsparenden Arbeitsablauf für den Benutzer. Um eine instinktive Benutzung des Lagersystems zu garantieren, wäre es beispielsweise denkbar, die zweite Beleuchtungseinheit mit Leuchtmitteln roter Farbe und die erste Beleuchtungseinheit mit Leuchtmitteln grüner oder weißer Farbe vorzusehen. Diese Farben entsprechen den gewohnten Farbcodierungen, die beispielsweise auch in einer Ampel ein Verbot bzw. eine Freigabe repräsentieren.

Der Begriff der "ersten und zweiten Beleuchtungseinheit" ist hierbei breit aufzufassen. Insbesondere können die erste und zweite - und im Übrigen auch die im Folgenden eingeführte dritte - Beleuchtungseinheit auch durch ein einzelnes System gebildet sein, das in der Lage ist, Licht in einer Mehrzahl von Farben zu erzeugen. Hierbei kann beispielsweise an LED-Systeme gedacht werden, die in einer Baueinheit LEDs umfassen, die rotes, grünes und blaues Licht erzeugen können und durch geeignete Ansteuerung und Mischung der LEDs der einzelnen Farben in der Lage sind, ein breites Spektrum von Farbempfindungen bereitzustellen. Derartige Systeme werden häufig als "RGB-LEDs" bezeichnet. Die verschiedenen Beleuchtungseinheiten können dann bei Verwendung solcher Systeme, die in der Lage sind, verschiedene Farben auszustrahlen, durch ein einzelnes derartiges System gebildet sein, wobei dieses je nach momentan ausgestrahlter Farbe dann als die eine oder andere Beleuchtungseinheit wirkt. Anders ausgedrückt kann ein einzelnes System sowohl als erste als auch als zweite oder dritte Beleuchtungseinheit wirken, je nach Farbe des momentan des von ihm ausgestrahlten Lichts.

In einer Weiterbildung kann die Signalvorrichtung ferner derart gebildet sein, dass sie eine dritte Beleuchtungseinheit einer dritten Farbe umfasst, welche wenigstens ein Leuchtmittel umfasst und dazu eingerichtet ist, den Ausgaberaum zu beleuchten, wenn ein Zugreifen durch die Bedienöffnung zwar zulässig ist, aber gemäß eines vorgegebenen Arbeitsablaufs zunächst kein Zugriff auf den Ausgaberaum durch den Benutzer vorgesehen ist. Eine derartige Weiterbildung der Signalvorrichtung ist insbesondere dort vorteilhaft, wo eine Mehrzahl von Lagersystemen koordiniert in Benutzung sind und ein Benutzer eine vorbestimmte Reihenfolge der Entnahme der angeforderten Waren aus mehreren Lagersystemen einzuhalten hat. In einem solchen Fall kann der Benutzer direkt auf die Einhaltung des vorgesehenen Ablaufs hingewiesen werden, indem nur derjenige Ausgaberaum, der die zuerst zu entnehmende Ware enthält, durch eine erste Beleuchtungseinheit beispielsweise in grün beleuchtet ist, während Ausgaberäume, die Waren enthalten, die erst später planmäßig zu entnehmen sind, durch dritte Beleuchtungseinheiten beispielsweise in orange beleuchtet sind.

Um den Benutzungskomfort weiter zu erhöhen und den jeweiligen Arbeitsablauf noch weiter zu optimieren, kann die Signalvorrichtung ferner derart gebildet sein, dass eine Beleuchtungseinheit ferner dazu eingerichtet ist, einen relevanten Bereich, wie beispielsweise eine von dem Benutzer zu entnehmende Ware in dem Ausgaberaum, ausschließlich, mit einer erhöhten Helligkeit oder einer anderen Farbe zu beleuchten. Auf diese Weise wird der Benutzer direkt darauf hingewiesen, welche Ware durch ihn zu entnehmen ist, was eine eventuelle Identifizierung der angeforderten Ware und eine Suche nach ihr überflüssig macht. In diesem Zusammenhang ist festzuhalten, dass eine derartige Signalvorrichtung auch vorteilhaft mit zusätzlichen oder bereits vorhandenen Anzeigehilfen, wie beispielsweise positionierbaren Laserpointern, zusammenwirken kann, welche für sich alleine zunächst unter Umständen nur schwer erkennbar sind. Ein Benutzer würde hierbei durch die Beleuchtungseinheit zunächst auf einen relevanten Bereich aufmerksam gemacht, in oder nahe welchem dann die zusätzliche Anzeigehilfe ebenfalls gut erkennbar ist. Derartige Lichtzeigereinrichtungen als Kommissionierhilfen sind an sich bekannt; sie lösen jedoch nicht das der vorliegenden Erfindung zugrunde liegende Sicherheitsproblem.

In einer Weiterbildung der erfindungsgemäßen Signalvorrichtung kann wenigstens eines der Leuchtmittel wenigstens eine LED umfassen, was zu einem stromsparenden Betrieb der entsprechenden Signalvorrichtung führen kann.

Zusätzlich zu den wenigstens zwei Beleuchtungseinheiten kann die Signalvorrichtung ferner wenigstens ein akustisches Element, wie beispielsweise einen Lautsprecher oder eine Klingel, umfassen. In einer derartigen Ausführungsform wird der Benutzer beispielsweise durch ein Klingeln darauf hingewiesen, dass ein Zugreifen durch die Bedienöffnung in den Ausgaberaum ab sofort zulässig ist. In einer weiteren Ausführungsform kann auch die momentane Unzulässigkeit eines Zugriffs in den Ausgaberuam akustisch signalisiert werden.

Zuletzt betrifft die Erfindung auch noch eine Lageranordnung, die eine Mehrzahl der eben angesprochenen Lagersysteme umfasst, wobei der Mehrzahl von Lagersystemen eine einzelne Steuereinheit zugeordnet ist oder die jeweiligen Steuereinheiten der Lagersysteme miteinander betriebsmäßig gekoppelt oder koppelbar sind.

Vorteile und Einzelheiten der vorliegenden Erfindung werden mittels der in den folgenden schematischen Figuren dargestellten Ausführungsform exemplarisch näher erläutert.

Diese zeigen im Einzelnen:
- Figur 1: eine schematische Darstellung eines automatischen Lagersystems;
- Figuren 2a - 2d: schematische Darstellungen der Bedienöffnung des Lagersystems aus Figur 2, wobei jeweils erfindungsgemäße Signalvorrichtungen in Betrieb sind; und
- Figur 3: eine schematische Darstellung der relevanten Komponenten des Lagersystems als Blockdiagramm.

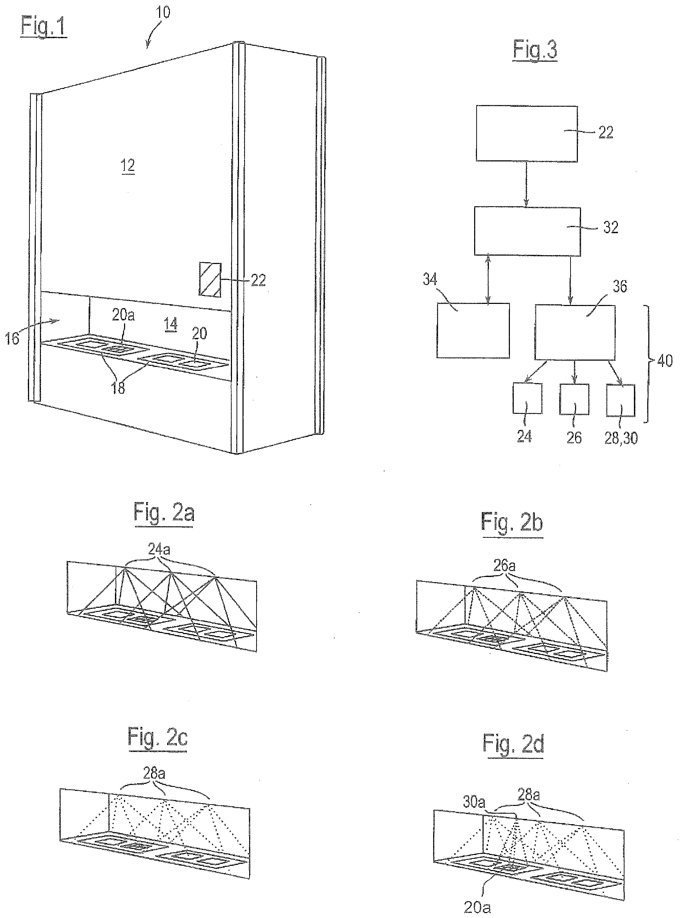

In Figur 1 ist ein automatisches Lagersystem ganz allgemein mit 10 bezeichnet. Das Lagersystem 10 umfasst ein Magazin 12, in dem Tablare abgelegt sind, auf denen sich die gelagerten Waren befinden. Im unteren Bereich des Lagersystems 10 befindet sich ein Ausgaberaum 14, in den ein Benutzer durch eine Bedienöffnung 16 eingreifen kann. In dem Ausgaberaum 14 ist in dem in Figur 1 gezeigten Zustand ein Tablar 18 angeordnet, auf dem sich Waren 20, 20a befinden. Hierbei ist die Ware 20a durch eine Schraffierung hervorgehoben, da sie im gezeigten Fall der von dem Benutzer zu entnehmenden Ware entspricht.

Das Tablar 18 ist in den Ausgaberaum 14 von einem nicht dargestellten Warentransportsystem positioniert worden, das automatisch die jeweiligen Tablare aus dem Magazin 12 in den Ausgaberaum 14 transportiert. Hierzu ist eine Benutzerschnittstelle 22 vorgesehen, die beispielsweise einen Barcodescanner, eine Eingabetastatur oder einen Touchscreen umfassen kann, und mittels derer der Benutzer einer nicht gezeigten Steuereinheit des Lagersystems 10 mitteilen kann, welche der im Magazin 12 abgelegten Waren in dem Ausgaberaum 14 zu positionieren sind. Ferner könnte das Lagersystem auch betriebsmäßig in ein übergeordnetes System eingebettet sein, wobei die Steuereinheit des Lagersystems über eine Netzwerkschnittstelle Anweisungen von dem übergeordneten System erhält.

Die Figuren 2a - 2d zeigen nun lediglich schematisch den Ausgaberaum 14 des Lagersystems 10 aus Figur 1, wobei schematisch Leuchtkegel von jeweiligen Beleuchtungseinheiten 24, 26, 28, im dargestellten Beispiel in Figuren 2a- 2c jeweils bestehend aus drei Leuchtmitteln 24a, 26a, 28a, wie beispielsweise farbigen LEDs, dargestellt sind. Die Darstellung der Leuchtkegel mittels durchgezogener, gestrichelter und gepunkteter Linien in den Figuren 2a - 2c stellt schematisch dar, dass es sich hierbei um Beleuchtungen mit verschiedener Farbe handelt. Beispielsweise können die Leuchtkegel in Figur 2a von jeweiligen roten Leuchtmitteln 24a ausgestrahlt werden, die den Benutzer des Lagersystems darauf hinweisen, dass ein Zugriff durch die Bedienöffnung 16 in den Ausgaberaum 14 hinein momentan nicht zulässig ist. Dies ist beispielsweise dann der Fall, wenn das Warentransportsystem noch in Bewegung ist und eine Gefahr für die Gesundheit des Benutzers darstellen kann. In Figur 2b hingegen handelt es sich um von orangefarbenen Leuchtmitteln 26 ausgestrahlte Lichtkegel, die den Benutzer darauf hinweisen, dass ein Zugriff durch die Bedienöffnung 16 in den Ausgaberaum 14 zwar momentan zulässig und sicher ist, allerdings in dem für ihn vorgesehenen Arbeitsablauf zunächst noch wenigstens ein anderer Arbeitsschritt vorgesehen ist, wie beispielsweise das Entnehmen einer Ware aus einem weiteren Lagersystem.

In Figur 2c wird der Ausgaberaum 14 zuletzt mittels grüner oder weißer Leuchtmittel 28a beleuchtet, die den Benutzer darauf hinweisen, dass ein Zugreifen durch die Bedienöffnung 16 in den Ausgaberaum 14 momentan zulässig und in seinem vorgesehenen Arbeitsablauf auch an der Reihe ist.

Figur 2d zeigt ferner eine abgewandelte Ausführungsform, in der entsprechend dem Zustand aus Figur 2c ebenfalls weiße oder grüne Leuchtmittel 28a den Ausgaberaum 14 beleuchten, wobei allerdings eine Beleuchtung größerer Intensität oder anderer Farbe auf die einzelne von dem Benutzer zu entnehmende Ware 20a gerichtet ist, was es dem Benutzer einfacher macht, die von ihm zu entnehmende Ware zu identifizieren. Der Benutzer kann jedoch aus größerer Entfernung bei flüchtiger Betrachtung erkennen, in welcher Farbe der Ausgaberaum 14 grundsätzlich ausgeleuchtet ist, so dass er schon aus der Entfernung sehen kann, ob oder ob nicht der Ausgaberaum für einen Zugriff freigegeben ist. Dies kann bei großen Lagersystemen mit mehreren Ausgaberäumen Laufwege einsparen.

Zu guter Letzt ist in Figur 3 grob schematisch in einem Blockdiagramm der Aufbau der Steuerung eines Lagersystems, das die erfindungsgemäße Signalvorrichtung umfasst, sowie seine Funktionsweise dargestellt. Wie angesprochen umfasst das Lagersystem eine Benutzerschnittstelle 22, die beispielsweise einen Barcodescanner oder andere Eingabegeräte umfassen kann. Diese Schnittstelle 22 gibt die eingelesenen Daten an die Steuereinheit 32 des Lagersystems 10 weiter, welche wiederum den mittels der Schnittstelle 22 eingegebenen Auftrag verarbeitet. Alternativ oder zusätzlich kann die Steuereinheit 32 auch mittels einer Netzwerkschnittstelle Anweisungen von einem übergeordneten System 50 erhalten.

Nachfolgend weist die Steuereinheit 32 das Warentransportsystem 34 an, eine angeforderte Ware 20a auf ihrem entsprechenden Tablar 18 in dem Ausgaberaum 14 des Lagersystems 10 anzuordnen, indem sie dort hin mittels geeigneter Überführungsmittel transportiert wird. Ist dieser Vorgang soweit abgeschlossen, dass das Warentransportsystem 34 die angeforderte Ware 20a in dem Ausgaberaum 14 positioniert hat, und ferner der Vorgang soweit abgeschlossen ist, dass ein Zugreifen in den Ausgaberaum 14 durch die Bedienöffnung 16 für einen Benutzer zulässig, d.h. sicher ist, so meldet das Warentransportsystem 34 dies an die Steuereinheit 32 zurück. Auf diese Rückmeldung hin gibt die Steuereinheit 32 eine Anweisung an die erfindungsgemäße Signalvorrichtung 40 weiter, die ihrerseits ein Steuerelement 36 sowie Beleuchtungseinheiten 24, 26 und 28 oder 30 mit jeweiligen Leuchtelementen 24a, 26a, 28a, 30a umfasst. Bevor das Steuerelement 36 von der Steuereinheit 32 das Signal bekommen hat, dass ein Zugreifen durch die Bedienöffnung 16 momentan zulässig ist, sind die in Figur 2a gezeigten roten Leuchtmittel 24a aktiv.

Sobald ein Zugreifen durch die Bedienöffnung 16 zulässig ist, das Zugreifen allerdings noch nicht erwünscht ist, werden die in Figur 2b gezeigten orangefarbenen Leuchtmittel 26a betrieben. Wenn zuletzt das Steuerelement 36 von der Steuereinheit 32 die Nachricht bekommt, dass das Zugreifen durch die Bedienöffnung 16 in den Ausgaberaum 14 momentan sowohl zulässig als auch im Arbeitsablauf des Benutzers vorgesehen ist, so werden je nach Ausführungsform der Signalvorrichtung entweder die in Figur 2c gezeigten weißen oder grünen Leuchtmittel 28a betrieben oder der in Figur 2d gezeigte Zustand hergestellt.

Es sei noch nachgetragen, dass die Leuchtmittel 24, 26, 28 und 30 auch durch ein einzelnes System gebildet sein können, das in der Lage ist, Licht verschiedener Farben auszustrahlen und beispielsweise sogenannte RGBLEDs umfassen kann. In einem solchen Fall wirkt das einzelne System je nach momentan ausgestrahlter Farbe als erste, zweite oder dritte Beleuchtungseinheit und die RGB-LEDs dementsprechend als jeweiliges Leuchtmittel 24a, 26a, 28a und 30a. Hierdurch ist die vorliegende Ausführungsform dahingehend flexibel, dass je nach gewünschtem Prozess und Arbeitsablauf durch die beliebige Ansteuerbarkeit der Leuchtmittel passende Lichtschemata eingestellt werden können. Zu guter Letzt sei noch erwähnt, dass die Schnittstelle 22, die Steuereinheit 32 oder/und das Steuerelement 36 in einer einzelnen Hardware-Vorrichtung, wie beispielsweise einem Computersystem, integriert sein können.

## Patentansprüche

1. Lagersystem, umfassend:
ein Warentransportsystem (34), welches dazu eingerichtet ist, Waren (20, 20a) zwischen einem Warenmagazin (12) und wenigstens einem Ausgaberaum (14) zu transportieren,
eine Steuereinheit (32), welche dazu eingerichtet ist, eine durch einen Benutzer eingegebene oder von einem übergeordneten System (50) übermittelte Anweisung zu erfassen und das Warentransportsystem (34) derart zu steuern, dass eine angeforderte Ware (20a) durch das Warentransportsystem (34) in dem Ausgaberaum (14) positioniert wird,
wobei der wenigstens eine Ausgaberaum (14) wenigstens eine Bedienöffnung (16) umfasst, durch welche der Benutzer auf die in dem Ausgaberaum (14) positionierte Ware (20, 20a) zugreifen kann, und eine Signalvorrichtung (40), welche betriebsmäßig mit der Steuereinheit (32) oder dem übergeordneten System (50) gekoppelt oder koppelbar ist, wobei die Signalvorrichtung ferner dazu eingerichtet ist, mittels eines optischen oder akustischen Signals den Benutzer zu benachrichtigen, dass ein Zugreifen durch die Bedienöffnung (16) momentan zulässig oder nicht zulässig ist, wobei die Signalvorrichtung wenigstens eine erste Beleuchtungseinheit (28, 30) einer ersten Farbe und eine zweite Beleuchtungseinheit (24) einer zweiten Farbe umfasst, **dadurch gekennzeichnet, dass** die Beleuchtungseinheiten (24, 28, 30) jeweils wenigstens ein Leuchtmittel (24a, 28a, 30a) umfassen und die Signalvorrrichtung (40) derart eingerichtet ist, dass die erste Beleuchtungseinheit (28, 30) den Ausgaberaum (14) beleuchtet, wenn ein Zugreifen durch die Bedienöffnung (16) momentan zulässig ist, und die zweite Beleuchtungseinheit (24) den Ausgaberaum (14) beleuchtet, wenn ein Zugreifen durch die Bedienöffnung (16) momentan nicht zulässig ist, wobei die Beleuchtungseinheiten (28, 30) jeweils derart angeordnet sind, dass sie den Ausgaberaum (14) von innen beleuchten.

2. Lagersystem nach Anspruch 1, **dadurch gekennzeichnet, dass** die Signalvorrichtung eine dritte Beleuchtungseinheit (26) einer dritten Farbe umfasst, welche wenigstens ein Leuchtmittel (26a) umfasst, und die Signalvorrrichtung (40) derart eingerichtet ist, dass die dritte Beleuchtungseinheit (26) den Ausgaberaum (14) beleuchtet, wenn ein Zugreifen durch die Bedienöffnung (16) zwar zulässig ist, aber gemäß eines vorgegebenen Arbeitsablaufs zunächst kein Zugriff auf den Ausgaberaum (14) durch den Benutzer vorgesehen ist.

3. Lagersystem nach einem der Ansprüche 1 oder 2, **dadurch gekennzeichnet, dass** die erste Beleuchtungseinheit (30) ferner dazu eingerichtet ist, eine von dem Benutzer zu entnehmende Ware (20a) in dem Ausgaberaum (14) mit einer erhöhten Helligkeit oder einer anderen Farbe zu beleuchten als den Ausgaberaum (14) selbst.

4. Lagersystem nach einem der vorhergehenden Ansprüche, **dadurch gekennzeichnet, dass** wenigstens eines der Leuchtmittel (24, 26a, 28a, 30a) wenigstens eine LED umfasst.

5. Lagersystem nach einem der vorhergehenden Ansprüche, **dadurch gekennzeichnet, dass** die Signalvorrichtung wenigstens ein akustisches Element, wie beispielsweise einen Lautsprecher oder eine Klingel, umfasst.

6. Lageranordnung umfassend eine Mehrzahl von Lagersystemen (10) nach einem der vorhergehenden Ansprüche, wobei der Mehrzahl von Lagersystemen (10) eine einzelne Steuereinheit zugeordnet ist oder die jeweiligen Steuereinheiten (32) der Lagersysteme (10) miteinander betriebsmäßig gekoppelt oder koppelbar sind.

## Claims

1. Storage system, comprising:
a goods transport system (34) which is designed to transport goods (20, 20a) between a goods compartment (12) and at least one dispensing space (14), a control unit (32) which is designed to detect a command entered by a user or transmitted by an overriding system (50) and to control the goods transport system (34) such that a requested goods item (20a) is positioned in the dispensing space (14) by the goods transport system (34), the at least one dispensing space (14) comprising at least one service opening (16) by means of which the user can access the goods (20, 20a) positioned in the dispensing space (14), and a signalling device (40) that is operatively coupled or can be operatively coupled to the control unit (32) or the overriding system (50), the signalling device also being designed to notify the user by means of a visual or audio signal whether access through the service opening (16) is currently permitted or not, the signalling device comprising at least one first lighting unit (28, 30) in a first colour and a second lighting unit (24) in a second colour, **characterised in that** the lighting units (24, 28, 30) each comprise at least one illuminant (24a, 28a, 30a) and the signalling device (40) is designed such that the first lighting unit (28, 30) illuminates the dispensing space (14) when access through the service opening (16) is currently permitted, and the second lighting unit (24) illuminates the dispensing space (14) when access through the service opening (16) is not currently permitted, the lighting units (28, 30) each being arranged such that they illuminate the dispensing space (14) from inside.

2. Storage system according to claim 1, **characterised in that** the signalling device comprises a third lighting unit (26) in a third colour, which comprises at least one illuminant (26a), and the signalling device (40) is designed such that the third lighting unit (26) illuminates the dispensing space (14) when access through the service opening (16) is permitted, but, according to a predetermined workflow, the user is initially denied access to the dispensing space (14).

3. Storage system according to either claim 1 or claim 2, **characterised in that** the first lighting unit (30) is also designed to illuminate a goods item to be removed by the user (20a) from the dispensing space (14) by means of increased brightness or a different colour to that used for the dispensing space (14) itself.

4. Storage system according to any of the preceding claims, **characterised in that** at least one of the illuminants (24, 26a, 28a, 30a) comprises at least one LED.

5. Storage system according to any of the preceding claims, **characterised in that** the signalling device comprises at least one audio element, such as a speaker or a bell.

6. Storage assembly comprising a plurality of storage systems (10) according to any of the preceding claims, wherein a single control unit is associated with the plurality of storage systems (10), or the respective control units (32) of the storage systems (10) are operatively coupled or can be operatively coupled to one another.

## Revendications

1. Système de stockage, comprenant :
un système de transport de marchandises (34), qui est agencé pour transporter des marchandises (20, 20a) entre un magasin de marchandises (12) et au moins un espace de distribution (14),
une unité de commande (32), qui est agencée pour détecter une instruction entrée par un utilisateur ou transmise par un système (50) de niveau supérieur, et pour commander le système de transport de marchandises (34) de telle sorte qu'une marchandise (20a) demandée est positionnée par le système de transport de marchandises (34) dans l'espace de distribution (14), l'espace de distribution (14) au moins au nombre de un comprenant au moins une ouverture de desserte (16) à travers laquelle l'utilisateur peut saisir la marchandise (20, 20a) positionnée dans l'espace de distribution (14), et
un dispositif de signalisation (40) qui est couplé ou peut être couplé de façon opérationnelle à l'unité de commande (32) ou au système (50) de niveau supérieur,
le dispositif de signalisation étant en outre agencé pour, au moyen d'un signal optique ou acoustique, informer l'utilisateur qu'une saisie à travers l'ouverture de desserte (16) est momentanément autorisée ou non autorisée, le dispositif de signalisation comprenant au moins une première unité d'éclairage (28, 30) d'une première couleur et une deuxième unité d'éclairage (24) d'une deuxième couleur, **caractérisé en ce que** les unités d'éclairage (24, 28, 30) comprennent respectivement au moins un moyen d'éclairage (24a, 28a, 30a), et le dispositif de signalisation (40) est agencé de telle sorte que la première unité d'éclairage (28, 30) éclaire l'espace de distribution (14) quand une saisie à travers l'ouverture de desserte (16) est momentanément autorisée, et la deuxième unité d'éclairage (24) éclaire l'espace de distribution (14) quand une saisie à travers l'ouverture de desserte (16) est momentanément non autorisée, les unités d'éclairage (28, 30) étant respectivement disposées de telle sorte qu'elles éclairent l'espace de distribution (14) de l'intérieur.

2. Système de stockage selon la revendication 1, **caractérisé en ce que** le dispositif de signalisation comprend une troisième unité d'éclairage (26) d'une troisième couleur qui comprend au moins un moyen d'éclairage (26a), et le dispositif de signalisation (40) est agencé de telle sorte que la troisième unité d'éclairage (26) éclaire l'espace de distribution (14) quand une saisie à travers l'ouverture de desserte (16) est certes autorisée mais, selon une séquence de travail prescrite, aucune saisie à l'espace de distribution (14) par l'utilisateur n'est alors prévue.

3. Système de stockage selon l'une des revendications 1 ou 2, **caractérisé en ce que** la première unité d'éclairage (30) est en outre agencée pour éclairer dans l'espace de distribution (14) une marchandise (20a) devant être prélevée par l'utilisateur avec une luminosité accrue ou avec une autre lumière que l'espace de distribution (14) lui-même.

4. Système de stockage selon l'une des revendications précédentes, **caractérisé en ce qu'**au moins un des moyens d'éclairage (24, 26a, 28a, 30a) comprend au moins une DEL.

5. Système de stockage selon l'une des revendications précédentes, **caractérisé en ce que** le dispositif de signalisation comprend au moins un élément acoustique, comme par exemple un haut-parleur ou une sonnette.

6. Ensemble de stockage comprenant une pluralité de systèmes de stockage (10) selon l'une des revendications précédentes, une unité de commande individuelle étant affectée à la pluralité de systèmes de stockage (10), ou les unités de commande (32) respectives des systèmes de stockage (10) étant couplées ou pouvant être couplées de façon opérationnelle les unes aux autres.
